# EUROPÄISCHE PATENTSCHRIFT

(11) **EP 3 639 723 B1**
(45) Veröffentlichungstag und Bekanntmachung des Hinweises auf die Patenterteilung: **11.08.2021**
(21) Anmeldenummer: 19200325.9
(22) Anmeldetag: 30.09.2019
(51) Int. Cl.: A47L 15/42

(54) **HAUSHALTSGESCHIRRSPÜLMASCHINE MIT WÄRMEPUMPE**
DOMESTIC DISHWASHER WITH A HEAT PUMP
LAVE-VAISSELLE DOMESTIQUE AVEC UNE POMPE À CHALEUR

(30) Priorität: 18.10.2018 ES 201831016
(43) Veröffentlichungstag der Anmeldung: 22.04.2020
(73) Patentinhaber: BSH Hausgeräte GmbH, 81739 München (DE)
(72) Erfinder: Arandigoyen Martínez, Naiara, 31005 Pamplona (ES); Casado Carlino, Sergio, 31621 Sarriguren (ES); Merino Alcaide, Eloy, 31621 Sarriguren (ES); Moliner Murillo, Gustavo, 31200 31200 Estella (Navarra) (ES); Sadaba Chalezquer, Jose Maria, 31008 Pamplona (ES); Sagües García, Xabier, 31001 Pamplona (ES); Vereda Ortiz, Ciro Sebastián, 31014 Pamplona (ES)

(56) Entgegenhaltungen:
- EP-A2- 3 114 978
- WO-A1-2018/077635

## Beschreibung

Die Erfindung betrifft eine Haushaltsgeschirrspülmaschine mit einem durch eine Tür verschließbaren Aufnahmeraum zur Aufnahme von Spülgut und mit einer Wärmepumpenanordnung, die bei ihrem Betrieb von einem Wärmeträger durchströmt wird, wobei die Wärmepumpenanordnung zumindest einen Verdampfer zum Verdampfen des Wärmeträgers, einen Verdichter zum Verdichten des vom Verdampfer kommenden Wärmeträgers und einen Verflüssiger zum Kondensieren des vom Verdichter kommenden Wärmeträgers umfasst, wobei die Haushaltsgeschirrspülmaschine darüber hinaus eine Umwälzpumpe aufweist, mit deren Hilfe Spülflotte während eines Spülprogramms von einem Pumpensumpf der Haushaltsgeschirrspülmaschine zu wenigstens einem Sprüharm förderbar ist.

Ferner wird ein erfindungsgemäßes Verfahren zum Betreiben einer Haushaltsgeschirrspülmaschine mit einem durch eine Tür verschließbaren Aufnahmeraum zur Aufnahme von Spülgut und mit einer Wärmepumpenanordnung beschrieben, die bei ihrem Betrieb von einem Wärmeträger durchströmt wird, und die unter anderem einen Verdampfer, einen Verdichter und einen Verflüssiger umfasst, wobei der Wärmeträger beim Betrieb der Wärmepumpenanordnung mit Hilfe des Verdampfers verdampft wird, wobei der vom Verdampfer kommende Wärmeträger mit Hilfe des Verdichters verdichtet wird, wobei der vom Verdichter kommende Wärmeträger mit Hilfe des Verflüssigers verflüssigt wird, wobei die Haushaltsgeschirrspülmaschine darüber hinaus eine Umwälzpumpe aufweist, mit deren Hilfe Spülflotte während eines Spülprogramms zumindest zeitweise von einem Pumpensumpf der Haushaltsgeschirrspülmaschine zu wenigstens einem Sprüharm gefördert wird. Haushaltsgeschirrspülmaschinen sind im Stand der Technik bekannt und dienen prinzipiell dem Reinigen und anschließenden Trocknen von verunreinigtem Spülgut, beispielsweise Geschirr oder Besteck. Während eines oder mehrerer Reinigungsschritte wird das Spülgut mit Spülflotte (= Wasser oder Wasser mit Reinigungs- und/oder Klarspülmittel) beaufschlagt, um Verunreinigungen vom Spülgut zu lösen. Zum Trocknen des Spülguts weisen entsprechende Haushaltsgeschirrspülmaschinen jeweils ein Trocknungssystem für das gereinigte Spülgut auf, bei dem Luft das Wasser, das an dem gereinigten Spülgut haftet, aufnimmt und das Spülgut hierdurch trocknet.

Die Haushaltsgeschirrspülmaschine gemäß der vorliegenden Erfindung weist eine nachfolgend beschriebene Wärmepumpenanordnung zum Erwärmen von in der Haushaltsgeschirrspülmaschine zirkulierender Spülflotte auf. Die Wärmepumpenanordnung umfasst prinzipiell einen als Verdampfer wirkenden Wärmetauscher zum Verdampfen eines Wärmeträgers (z. B. Propan (R290)) und einen Verdichter (andere Bezeichnung: Kompressor) zum Verdichten des verdampften Wärmeträgers. Mit Hilfe des Verdichters wird der in den Verdichter beim Betrieb der Wärmepumpenanordnung eintretende gasförmige Wärmeträger komprimiert, wobei er sich erwärmt.

Ferner umfasst die Wärmepumpenanordnung einen als Verflüssiger (andere Bezeichnung: Kondensor) wirkenden Wärmetauscher, in dem der erwärmte gasförmige Wärmeträger wieder kondensiert und hierbei Wärme abgibt, die beispielsweise für die Erwärmung von in der Haushaltsgeschirrspülmaschine vorhandener Spülflotte genutzt werden kann. Anschließend wird der verflüssigte Wärmeträger mit Hilfe eines Expansionsorgans (in der Regel eines Drosselventils oder eines Kapillarröhrchens) entspannt und gelangt schließlich wieder zurück zum Verdampfer, in dem er unter Wärmeaufnahme wieder in den gasförmigen Zustand übergeht, um dann erneut dem Verdichter zugeführt zu werden.

Die genannten Wärmetauscher können beispielsweise als Rohrschlange oder auch als flächig ausgebildeter Wärmetauscher (sogenannter Plattenwärmetauscher) vorliegen. In jedem Fall sind ein Einlass und ein Auslass für den Wärmeträger vorhanden. Ist der Wärmetauscher als Plattenwärmetauscher ausgebildet, so umfasst dieser in der Regel mehrere sandwichartig zueinander angeordnete Abschnitte zweier Hohlräume. Ein erster Hohlraum wird beim Betrieb der Wärmepumpenanordnung vom Wärmeträger durchströmt, während ein zweiter Hohlraum von der Spülflotte durchströmt wird. Innerhalb des Plattenwärmetauschers strömen damit die Spülflotte und der Wärmeträger stets in zueinander benachbarten Abschnitten der jeweiligen Hohlräume, so dass ein Wärmeübergang vom Wärmeträger auf die Spülflotte erfolgt.

Insbesondere der als Verflüssiger dienende Wärmetauscher besitzt vorzugsweise einen Einlass und einen Auslass für die Spülflotte, so dass die Spülflotte an einer oder mehreren Trennwänden des Verflüssigers vorbeigeführt werden kann, der oder die den Verflüssiger intern in mehrere voneinander getrennte Bereiche trennt bzw. trennen, wobei ein erster Bereich von der Spülflotte und ein zweiter Bereich vom Wärmeträger durchströmt wird. Im Bereich der Trennwand erfolgt schließlich die gewünschte Wärmeübertragung vom Wärmeträger auf die Spülflotte, um diese zu erwärmen.

Z.B. gibt die WO 2018/077635 A1 eine Haushaltsgeschirrspülmaschine mit einer Wärmepumpenanordnung an, die einen Verdampfer zum Verdampfen eines Kältemittels und einen Verflüssiger zum Kondensieren des Kältemittels umfasst. Die vom Verflüssiger abgegebene Wärme kann mit Hilfe eines Wärmetauschers für die Erwärmung von in der Haushaltsgeschirrspülmaschine vorhandene Spülflotte genutzt werden. Diese vorbekannte Haushaltsgeschirrspülmaschine weist zusätzlich einen Zuluftkanal, über den Luft während eines Trocknungsschritts eines Spülprogramms in ihren Spülgut-Aufnahmeraum strömen kann, und einen Abluftkanal auf, über den Luft während des Trocknungsschritts aus ihrem Spülgut- Aufnahmeraum strömen kann. Mit Hilfe der Wärmepumpenanordnung ist Wärme von der über den Zuluftkanal in den Spülgut-Aufnahmeraum strömenden Luft auf den Verdampfer und/oder auf einen dem Verdampfer zugeordneten Wärmespeicher übertragbar. Ferner ist zusätzlich ein Luftwärmetauscher vorgesehen, mit dessen Hilfe Wärme von der den Spülgut- Aufnahmeraum über den Abluftkanal verlassenden Luft auf die über den Zuluftkanal in den Spülgut- Aufnahmeraum strömende Luft übertragbar ist.

Aufgabe der vorliegenden Erfindung ist es, den bekannten Stand der Technik weiterzubilden.

Die Aufgabe wird gelöst durch eine Haushaltsgeschirrspülmaschine sowie ein Verfahren mit den Merkmalen der unabhängigen Patentansprüche.

Die erfindungsgemäße Haushaltsgeschirrspülmaschine weist zumindest eine Steuer- und/oder Regeleinheit sowie einen mit der Steuer- und/oder Regeleinheit in Verbindung stehenden Sensor auf, mit dessen Hilfe detektierbar ist, ob sich die Tür in ihrer Schließstellung befindet oder nicht. Bei dem Sensor kann es sich beispielsweise um einen optischen oder kapazitiven Sensor handeln, der ein Signal generiert, solange sich die Tür in der Schließstellung befindet oder sobald die Tür von einem Bediener geöffnet wird. Ebenso kann ein Kontaktsensor zum Einsatz kommen, der an der Tür oder einem Gehäuse der Haushaltsgeschirrspülmaschine angeordnet ist und der ausgebildet ist, ein Signal zu generieren, wenn die Tür geöffnet wird oder solange diese geschlossen ist.

Um zu verhindern, dass Spülflotte, die während eines Spülprogramms mit Hilfe der Umwälzpumpe innerhalb des Aufnahmeraums zirkuliert wird, nach außen gespritzt wird, wenn die Tür während des Betriebs der Umwälzpumpe geöffnet wird, ist ferner vorgesehen, dass die Steuer- und/oder Regeleinheit ausgebildet ist, die Umwälzpumpe zu deaktivieren bzw. deren Förderleistung zu reduzieren, wenn die Steuer- und/oder Regeleinheit mit Hilfe des Sensors während des Betriebs der Umwälzpumpe ein Öffnen der Tür erkennt.

Im Gegensatz hierzu wird erfindungsgemäß vorgeschlagen, dass die Steuer- und/oder Regeleinheit der Haushaltsgeschirrspülmaschine ausgebildet ist, die Wärmepumpenanordnung, d.h. insbesondere den Verdichter, zumindest für einen gewissen Zeitraum weiter zu betreiben, wenn die Steuer- und/oder Regeleinheit während des Betriebs der Wärmepumpenanordnung mit Hilfe des Sensors ein Öffnen der Tür erkennt. Im Gegensatz zur Umwälzpumpe wird die Wärmepumpenanordnung also nicht gestoppt, wenn ein Bediener die Tür der Haushaltsgeschirrspülmaschine während eines Spülprogramms öffnet.

Dies hat folgenden Vorteil: Während des Betriebs der Wärmepumpenanordnung wird vom Verdichter Wärmeträger verdichtet. Hierdurch entsteht innerhalb des Verdichters ein gewisser Druck, der auch dann bestehen bleibt, wenn die Wärmepumpenanordnung und damit auch der Verdichter gestoppt werden. Würde der Verdichter gestoppt, wenn die Tür beim Betrieb der Wärmepumpenanordnung von einem Bediener geöffnet wird, so würde hierdurch der Wiederanlauf des Verdichters nach dem Schließen der Tür erschwert, da der Verdichter gegen den zuvor aufgebauten Druck innerhalb des Verdichters ankämpfen müsste.

Die Erfindung sieht daher vor, den Verdichter auch dann weiter zu betreiben, wenn die Tür während des Betriebs der Wärmepumpenanordnung von einem Bediener geöffnet wird. Ein Wiederanlaufen des Verdichters nach dem Schließen der Tür ist daher nicht nötig.

Zusammenfassend ist also vorgesehen, dass dann, wenn die Tür während eines Spülprogramms von Bediener geöffnet wird, die Umwälzpumpe gestoppt wird, wenn sie zu diesem Zeitpunkt im Betrieb ist. Gleichzeitig ist vorgesehen, die Wärmepumpenanordnung weiter zu betreiben, wenn diese während des Öffnens der Tür bereits in Betrieb war.

Gemäß einer vorteilhaften Weiterbildung ist vorgesehen, dass die Haushaltsgeschirrspülmaschine eine Spülflottenpumpe aufweist, mit deren Hilfe Spülflotte vom Pumpensumpf zum Verflüssiger und zurück in den Aufnahmeraum förderbar ist. Hierdurch wird sichergestellt, dass im Bereich des Verflüssigers Wärme von dem durch den Verflüssiger strömenden Wärmeträger auf die durch den Verflüssiger strömende Spülflotte übertragbar ist, so dass die Spülflotte während des Betriebs der Wärmepumpenanordnung sowie der Spülflottenpumpe im Bereich des Verflüssigers erwärmt wird und anschließend in den Aufnahmeraum der Haushaltsgeschirrspülmaschine gelangt.

Nach einer vorteilhaften Weiterbildung ist vorgesehen, dass die Steuer- und/oder Regeleinheit ausgebildet ist, die Spülflottenpumpe zumindest für einen gewissen Zeitraum weiter zu betreiben, wenn die Steuer- und/oder Regeleinheit beim Betrieb der Spülflottenpumpe sowie der Wärmepumpenanordnung mit Hilfe des Sensors ein Öffnen der Tür erkennt. Hierdurch wird sichergestellt, dass die beim Betrieb des Verdichters entstehende Wärme auf die Spülflotte übertragen wird. Die Wärme wird auf diese Weise vom Verdichter abgeführt, so dass ein Überhitzen desselben aufgrund des Stillstands der Umwälzpumpe vermieden wird.

Generell ist es von Vorteil, die Spülflottenpumpe immer dann zu betreiben, wenn auch die Wärmepumpenanordnung in Betrieb ist.

Selbstverständlich ist es auch möglich, auf die Spülflottenpumpe zu verzichten. Beispielsweise wäre es denkbar, den Verflüssiger und/oder den Verdichter derart zu platzieren, dass er einen Teil der Wandung der Haushaltsgeschirrspülmaschine bildet, die den Aufnahmeraum nach außen hin abgrenzt. Ebenso wäre es möglich, den Verflüssiger und/oder den Verdichter an einer Stelle anzuordnen, an der das jeweilige Element an die genannte Wandung angrenzt und damit in wärmeleitendem Kontakt mit dieser steht. Vorteilhafterweise kann der Verflüssiger und/oder der Verdichter in direktem Kontakt mit einer Fläche stehen, die den Pumpensumpf im unteren Bereich der Haushaltsgeschirrspülmaschine begrenzt oder eine entsprechende Fläche bilden. Die Wärme vom Verflüssiger und/oder vom Verdichter kann in diesem Fall direkt über die genannte Fläche auf die Spülflotte übertragen werden, die sich im Pumpensumpf befindet. Auch in diesem Fall ist zumindest für einen gewissen Zeitraum eine Wärmeabfuhr vom Wärmepumpenkreislauf auf die Spülflotte möglich, auch wenn die Umwälzpumpe nach dem Öffnen der Tür gestoppt wurde.

Gemäß einer vorteilhaften Weiterbildung ist vorgesehen, dass die Steuer- und/oder Regeleinheit ausgebildet ist, die Wärmepumpenanordnung nach dem Öffnen der Tür bei weiterhin geöffneter Tür nur für einen definierten Zeitraum weiter zu betreiben, wobei sich der Zeitraum vorzugsweise über maximal 120 s (Sekunden), vorzugsweise über maximal 60 s, ab dem Öffnen der Tür erstreckt. Die Wärmepumpenanordnung wird also nach dem Öffnen der Tür nicht beliebig lange betrieben. Vielmehr ist es von Vorteil, diese nach einem gewissen Zeitraum zu deaktivieren, wenn die Türe innerhalb des entsprechenden Zeitraums vom Bediener nicht wieder geschlossen wird. Hierdurch wird der Energieverbrauch der Haushaltsgeschirrspülmaschine reduziert und eine übermäßige Erwärmung der Spülflotte verhindert.

Nach einer vorteilhaften Weiterbildung ist vorgesehen, dass die Steuer- und/oder Regeleinheit ausgebildet ist, die Spülflottenpumpe zu deaktivieren bzw. deren Förderleistung zu reduzieren, wenn die Steuer- und/oder Regeleinheit während des Betriebs der Spülflottenpumpe mit Hilfe des Sensors ein Öffnen der Tür erkennt. Dies ist beispielsweise dann sinnvoll, wenn die Spülflottenpumpe mit einer Spülflottenleitung in Verbindung steht, die im Bereich einer Seitenwandung in den Aufnahmeraum mündet, so dass vom Verflüssiger kommende Spülflotte über die Seitenwandung zurück in den Aufnahmeraum gepumpt werden kann. Wird nun während des Betriebs der Spülflottenpumpe die Tür geöffnet, so ist es von Vorteil, diese zu deaktivieren bzw. deren Förderleistung zu reduzieren, um zu verhindern, dass Spülflotte vom Aufnahmeraum nach außen spritzt. Da die Wärmeabfuhr vom Verflüssiger auf die Spülflotte in diesem Fall unterbrochen bzw. reduziert wird, ist es von Vorteil, die Wärmepumpenanordnung nach dem Öffnen der Tür nur für einen relativ kurzen Zeitraum weiter zu betreiben, um eine Überhitzung des Wärmeträgers bzw. der einzelnen Komponenten der Wärmepumpenanordnung, insbesondere des Verdichters, zu vermeiden. Insbesondere sollte die Steuer- und/oder Regeleinheit ausgebildet sein, die Wärmepumpenanordnung nach dem Öffnen der Tür bei weiterhin geöffneter Tür nur für einen definierten Zeitraum weiter zu betreiben, wobei sich der Zeitraum vorzugsweise über maximal 60 s, vorzugsweise über maximal 30 s, ab dem Öffnen der Tür erstreckt.

Gemäß einer vorteilhaften Weiterbildung ist vorgesehen, dass die Haushaltsgeschirrspülmaschine eine elektrische Spülflottenheizung aufweist, mit dessen Hilfe die Spülflotte erwärmbar ist. Die Haushaltsgeschirrspülmaschine umfasst in diesem Fall zwei Wärmequellen, nämlich die beschriebene Wärmepumpenanordnung und zusätzlich die genannte elektrische Spülflottenheizung. Beide Wärmequellen können prinzipiell gleichzeitig, jeweils einzeln, oder während sich überlappender Zeiträume betrieben werden. Beispielsweise wäre der gleichzeitige Betrieb von Wärmepumpenanordnung und Spülflottenheizung dann sinnvoll, wenn eine möglichst schnelle Erwärmung der Spülflotte, beispielsweise zu Beginn eines Reinigungs- oder Klarspülschritts, gewünscht ist. Denkbar ist ebenso, dass die Steuer- und/oder Regeleinheit ausgebildet ist, die Spülflotte mit Hilfe der Spülflottenheizung zu erwärmen, wenn die Wärmepumpenanordnung nach Ablauf des in den vorherigen Absätzen genannten Zeitraums deaktiviert wird. So wäre es beispielsweise denkbar, dass die Wärmepumpenanordnung nach dem Öffnen der Tür zunächst für einen gewissen Zeitraum betrieben und nach Ablauf des Zeitraums deaktiviert wird, wenn zum Ablauf des Zeitraums die Tür noch immer offensteht. Wird die Tür nun wieder geschlossen, so ist insbesondere vorgesehen, die Wärmepumpenanordnung nicht wieder zu starten, sondern die Spülflotte im weiteren Verlauf des Spülprogramms oder zumindest im Verlauf des aktuellen Spülprogrammabschnitts (z.B. eines Reinigungsschritts oder eines Klarspülschritts) mit Hilfe der Spülflottenheizung zu erwärmen.

Nach einer vorteilhaften Weiterbildung ist vorgesehen, dass die Steuer- und/oder Regeleinheit ausgebildet ist, die Leistung des Verdichters nach dem Erkennen des Öffnens der Tür zumindest für einen gewissen Zeitraum zu drosseln. Hierdurch wird die Wärmeerzeugung der Wärmepumpenanordnung reduziert, so dass auch weniger Wärme vom Verdichter bzw. vom Verflüssiger auf die Spülflotte übertragen werden muss. Gleichzeitig ist es auch denkbar, die Förderleistung einer vorhandenen Spülflottenpumpe zu reduzieren.

Das erfindungsgemäße Verfahren zeichnet sich dadurch aus, dass die Wärmepumpenanordnung der Haushaltsgeschirrspülmaschine zumindest für einen gewissen Zeitraum weiter betrieben wird, wenn während des Betriebs der Wärmepumpenanordnung die Tür geöffnet wird. Im Gegensatz zur Umwälzpumpe, die beim Öffnen der Tür deaktiviert wird, wird die Wärmepumpenanordnung also weiter betrieben. Durch die genannten Schritte wird zum einen verhindert, dass Spülflotte nach dem Öffnen der Tür nach außerhalb des Aufnahmeraums gespritzt wird. Gleichzeitig wird sichergestellt, dass der Verdichter, vorzugsweise bis zum Schließen der Tür, weiter betrieben wird. Der Verdichter muss nach dem Schließen der Tür also nicht erneut gestartet werden und hierbei gegen den zuvor aufgebauten Druck innerhalb des Verdichters ankämpfen. Das Öffnen der Tür wird vorzugsweise mit einem Sensor der Haushaltsgeschirrspülmaschine erkannt, wobei hinsichtlich des Sensors auf die bisherige bzw. nachfolgende Beschreibung verwiesen wird.

Gemäß einer vorteilhaften Weiterbildung ist vorgesehen, dass die Haushaltsgeschirrspülmaschine eine Spülflottenpumpe aufweist, mit deren Hilfe Spülflotte während eines Spülprogramms zumindest zeitweise vom Pumpensumpf zum Verflüssiger und zurück in den Aufnahmeraum gefördert wird. Die Spülflottenpumpe dient also der Zirkulation der Spülflotte, wobei diese beim Betrieb der Spülflottenpumpe vom Pumpensumpf zum Verflüssiger und vom Verflüssiger zurück in den Pumpensumpf oder direkt in den Aufnahmeraum gepumpt wird (beispielsweise über eine Seitenwandung der Haushaltsgeschirrspülmaschine, die den Aufnahmeraum nach außen begrenzt). Die Spülflottenpumpe stellt also sicher, dass beim Betrieb der Wärmepumpenanordnung Spülflotte vom Pumpensumpf zum Verflüssiger gepumpt und dort erwärmt wird. Selbstverständlich kann die Spülflottenpumpe mit der Steuer- und/oder Regeleinheit der Haushaltsgeschirrspülmaschine in Verbindung stehen, wobei die Steuer- und/oder Regeleinheit die Förderleistung der Spülflottenpumpe in Abhängigkeit des Fortschritts eines Spülprogramms regeln kann.

Nach einer vorteilhaften Weiterbildung ist vorgesehen, dass die Spülflottenpumpe zumindest für einen gewissen Zeitraum betrieben wird, um Wärme vom Verflüssiger auf die Spülflotte zu übertragen, wenn die Tür während des Betriebs der Wärmepumpenanordnung geöffnet wird. Um sicherzustellen, dass die während des Betriebs der Wärmepumpenanordnung erzeugte Wärme von der Wärmepumpenanordnung bzw. dessen Verflüssiger und/oder Verdichter abgeführt wird, erfolgt im Bereich des Verflüssigers und/oder des Verdichters eine Wärmeübertragung auf die von der Spülflottenpumpe zirkulierte Spülflotte, wobei die Wärmeübertragung direkt oder indirekt über einen Wärmetauscher erfolgen kann. Hierdurch wird ein Überhitzen insbesondere des Verdichters vermieden. Vorzugsweise wird die Spülflottenpumpe zumindest dann betrieben, wenn auch die Wärmepumpenanordnung in Betrieb ist (d.h., wenn der Verdichter Wärmeträger verdichtet).

Gemäß einer vorteilhaften Weiterbildung ist vorgesehen, dass die Wärmepumpenanordnung nach dem Öffnen der Tür bei weiterhin geöffneter Tür nur für einen definierten Zeitraum weiter betrieben wird, wobei sich der Zeitraum vorzugsweise über maximal 120 s, vorzugsweise über maximal 60 s, ab dem Öffnen der Tür erstreckt. Nach dem Öffnen der Tür wird die Wärmepumpenanordnung also nicht unbedingt bis zum erneuten Schließen der Tür weiter betrieben. Dies stellt sicher, dass es nicht zu einer Überhitzung der Wärmepumpenanordnung oder der Spülflotte kommt, wenn der Bediener die Tür nach einem gewissen Zeitraum nicht wieder schließt. Dies kann beispielsweise der Fall sein, wenn der Bediener die Tür gegen Ende eines Spülprogramms öffnet, zu dem die Wärmepumpenanordnung noch betrieben wird, und sich nach dem Öffnen der Tür entscheidet, die Haushaltsgeschirrspülmaschine vorzeitig zu entleeren.

Nach einer vorteilhaften Weiterbildung ist vorgesehen, dass die Spülflottenpumpe deaktiviert bzw. mit reduzierter Förderleistung weiter betrieben wird, wenn die Tür beim Betrieb der Spülflottenpumpe geöffnet wird. In diesem Fall wird weniger Wärme oder überhaupt keine Wärme mehr vom Verflüssiger und/oder dem Verdichter auf die Spülflotte übertragen. In diesem Fall ist es daher sinnvoll, die Wärmepumpenanordnung nach dem Öffnen der Tür bei weiterhin geöffneter Tür nur für einen relativ kurzen Zeitraum weiter zu betreiben, wobei sich der Zeitraum vorzugsweise über maximal 60 s, vorzugsweise über maximal 30 s, ab dem Öffnen der Tür erstreckt.

Gemäß einer vorteilhaften Weiterbildung ist vorgesehen, dass die Spülflotte mit Hilfe einer elektrischen Spülflottenheizung der Haushaltsgeschirrspülmaschine erwärmt wird, wenn die Wärmepumpenanordnung nach Ablauf des in einem der vorherigen Absätze genannten Zeitraums deaktiviert wird und die Tür nach Ablauf des genannten Zeitraums wieder geschlossen und das Spülprogramm fortgesetzt wird. In diesem Fall wird der Verdichter also nicht erneut gestartet und muss daher nicht gegen den Druck innerhalb des Verdichters ankämpfen. Vielmehr erfolgt die Erwärmung der Spülflotte in diesem Fall durch die Spülflottenheizung. Ob nach einem Schließen der Tür die Wärmepumpenanordnung oder die Spülflottenheizung zum Erwärmen der Spülflotte verwendet wird, kann auch davon abhängig sein, wie lange die Tür geöffnet war. Beispielsweise wäre es denkbar, die Spülflotte nach dem Schließen der Tür mit Hilfe der Spülflottenheizung zu erwärmen, wenn zwischen dem Öffnen und dem anschließenden Schließen der Tür ein definierter Zeitraum vergangen ist, dessen Betrag beispielsweise weniger als 5 Minuten beträgt. Im gegenteiligen Fall könnte die nach dem Schließen der Tür gewünschte Erwärmung der Spülflotte mit Hilfe der Wärmepumpenanordnung erfolgen, da der Druck innerhalb des Verdichters während des entsprechenden Zeitraums so weit gesunken ist, dass ein Wiederanlaufen des Verdichters problemlos möglich ist.

Nach einer vorteilhaften Weiterbildung ist vorgesehen, dass die Leistung des Verdichters nach dem Erkennen des Öffnens der Tür zumindest für einen gewissen Zeitraum gedrosselt wird. Hierdurch sinkt auch die Wärmeleistung der Wärmepumpenanordnung, d.h., die Wärmepumpenanordnung erzeugt weniger Energie, als wenn diese mit voller Leistung weiter betrieben würde. Im Ergebnis muss daher auch weniger Wärmeenergie vom Verdichter und/oder vom Verflüssiger der Wärmepumpenanordnung auf die Spülflotte übertragen werden, um ein Überhitzen der Wärmepumpenanordnung zu vermeiden.

Die Erfindung und ihre vorteilhaften Aus- und Weiterbildungen sowie deren Vorteile werden anhand der folgenden Zeichnung näher erläutert. Es zeigt in einer schematischen Prinzipskizze:

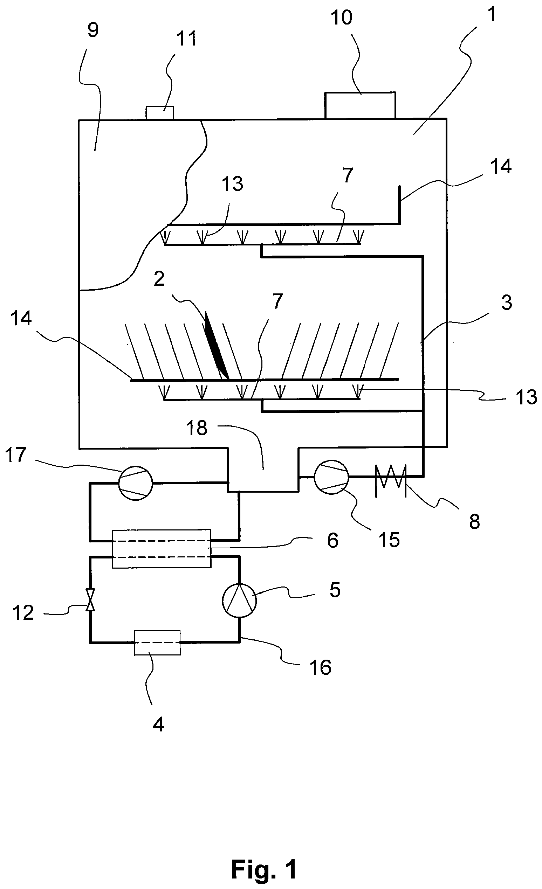

- **Figur 1**: ausgewählte Abschnitte einer Haushaltsgeschirrspülmaschine.

Figur 1 zeigt ausgewählte Abschnitte einer Haushaltsgeschirrspülmaschine. Hierbei sind nur diejenigen Bestandteile der Haushaltsgeschirrspülmaschine gezeigt, mit Bezugszeichen versehen und erläutert, welche für das Verständnis der Erfindung erforderlich sind. Es versteht sich von selbst, dass die erfindungsgemäße Haushaltsgeschirrspülmaschine weitere Teile und Baugruppen umfassen kann.

Wie Figur 1 zu entnehmen ist, umfasst die Haushaltsgeschirrspülmaschine einen Aufnahmeraum 1 für zu reinigendes Spülgut 2 (z.B. Geschirr) sowie einen oder mehrere Geschirrskörbe 14 zur Aufnahme des Spülguts 2. der Aufnahmeraum 1 kann mit Hilfe einer nur teilweise dargestellten Tür 9 nach außen hin verschlossen werden.

Ferner ist eine Umwälzpumpe 15 vorgesehen, mit deren Hilfe Spülflotte 13 innerhalb der Haushaltsgeschirrspülmaschine zirkuliert werden kann. Die Spülflotte 13 wird während eines Spülprogramms mit Hilfe der Umwälzpumpe 15 von einem Pumpensumpf 18 im unteren Teil der Haushaltsgeschirrspülmaschine in Richtung eines oder mehrerer Sprüharme 7 oder sonstiger Sprüheinrichtungen gepumpt und gelangt von dort auf das zu reinigende Spülgut 2.

Um die Spülflotte 13 während des Spülprogramms bzw. ausgewählter Abschnitte desselben erwärmen zu können, umfasst die Haushaltsgeschirrspülmaschine eine Wärmepumpenanordnung. Diese ist in Figur 1 unterhalb des Aufnahmeraums 1 gezeigt. Diese Anordnung ist nur exemplarisch zu verstehen. Selbstverständlich können die im Folgenden noch näher erläuterten Bestandteile der Wärmepumpenanordnung auch an anderer Stelle der Haushaltsgeschirrspülmaschine angeordnet sein.

Die Wärmepumpenanordnung umfasst prinzipiell einen Wärmetauscher in Form eines Verdampfers 4 zum Verdampfen eines Wärmeträgers (z. B. Propan (R290)) und einen Verdichter 5 (andere Bezeichnung: Kompressor) zum Verdichten des verdampften Wärmeträgers. Mit Hilfe des Verdichters 5 wird der in den Verdichter 5 beim Betrieb der Wärmepumpenanordnung eintretende gasförmige Wärmeträger komprimiert, wobei er sich erwärmt.

Ferner umfasst die Wärmepumpenanordnung einen weiteren Wärmetauscher in Form eines Verflüssigers 6 (andere Bezeichnung: Kondensor), in dem der erwärmte gasförmige Wärmeträger wieder kondensiert und hierbei Wärme abgibt, die beispielsweise für die Erwärmung von in der Haushaltsgeschirrspülmaschine vorhandener Spülflotte 13 genutzt werden kann. Anschließend wird der verflüssigte Wärmeträger mit Hilfe eines Expansionsorgans 12 (in der Regel eines Drosselventils oder eines Kapillarröhrchens) entspannt und gelangt schließlich wieder zurück zum Verdampfer 4, in dem er unter Wärmeaufnahme (beispielsweise aus der Umgebung der Haushaltsgeschirrspülmaschine oder deren Aufnahmeraum) wieder in den gasförmigen Zustand übergeht, um dann erneut dem Verdichter 5 zugeführt zu werden. Im Übrigen sind eine oder mehrere Wärmeträgerleitungen 16 vorhanden, über die der Wärmeträger innerhalb der Wärmepumpenanordnung zirkuliert.

Wird nun die Wärmepumpenanordnung während eines Spülprogramms betrieben, so wird im Verflüssiger 6 Wärme vom Wärmeträger auf die durch den Verflüssiger 6 strömende Spülflotte 13 übertragen. Vorzugsweise umfasst die Haushaltsgeschirrspülmaschine eine Spülflottenpumpe 17, mit deren Hilfe die Spülflotte 13 vom Pumpensumpf 18 durch eine Spülflottenleitung 3 zum Verflüssiger 6 und wieder zurück in den Aufnahmeraum 1 gepumpt werden kann.

Wird nun während eines Spülprogramms die Tür 9 vom Bediener geöffnet, weil dieser beispielsweise ein weiteres Spülgut in einen der Geschirrskörbe 14 einstellen möchte, so besteht prinzipiell die Gefahr, dass Spülflotte 13 von den Sprüharmen 7 nach außerhalb des Aufnahmeraums 1 gespritzt wird, wenn die Umwälzpumpe 15 beim Öffnen der Tür 9 in Betrieb ist. Um dies zu vermeiden, ist vorgesehen, dass die Umwälzpumpe 15 beim Öffnen der Tür 9 deaktiviert, d.h. gestoppt, wird, so dass keine weitere Spülflotte 13 mehr zu den Sprüharmen 7 gefördert wird. Alternativ kann es dafür auch ausreichend sein, die Förderleistung der Umwälzpumpe 15 entsprechend zu reduzieren.

Wird nun die Tür 9 während des Betriebs der Wärmepumpenanordnung geöffnet, so scheint es zunächst naheliegend, auch diese zu deaktivieren, um Energie einzusparen. Im Gegensatz hierzu schlägt die Erfindung jedoch vor, die Wärmepumpenanordnung zumindest für einen gewissen Zeitraum weiter zu betreiben, wenn die Tür 9 während des Betriebs der Wärmepumpenanordnung geöffnet wird.

Zur Steuerung der Wärmepumpenanordnung umfasst die Haushaltsgeschirrspülmaschine ferner eine Steuer- und/oder Regeleinheit 10, mit deren Hilfe unter anderem auch die Umwälzpumpe 15 aktiviert und deaktiviert werden kann.

Im Übrigen sollte die Haushaltsgeschirrspülmaschine einen Sensor 11 aufweisen, der ausgebildet ist, ein Öffnen der Tür 9 zu detektieren und ein entsprechendes Signal an die Steuer- und/oder Regeleinheit 10 der Haushaltsgeschirrspülmaschine zu senden.

Wird die Tür 9 innerhalb eines gewissen Zeitraums wieder geschlossen, so sind die Wärmepumpenanordnung und damit insbesondere auch der Verdichter 5 noch immer in Betrieb. Dies hat den Vorteil, dass der Verdichter 5 beim Schließen der Tür 9 nicht erneut gestartet werden und hierbei gegen den zuvor aufgebauten Druck des Wärmeträgers innerhalb des Verdichters ankämpfen muss. Zudem steht sofort nach dem Schließen der Tür 9 Wärmeenergie im Verflüssiger 6 zur Verfügung, die zum Erwärmen der Spülflotte 13 verwendet werden kann.

Auch ist es denkbar, das mit Hilfe der Steuer- und/oder Regeleinheit 10 die Förderleistung der Umwälzpumpe 15 und/oder die Verdichtungsleistung des Verdichters 5 während ausgewählter Abschnitte eines Spülprogramms erhöht oder verringert werden.

Beispielsweise wäre es denkbar, die Verdichtungsleistung des Verdichters 5 zu verringern, wenn während des Betriebs der Wärmepumpenanordnung die Tür 9 geöffnet wird. Hierdurch wird von der Wärmepumpenanordnung weniger Wärme erzeugt, so dass während des Zeitraums, in dem die Tür 9 geöffnet ist, weniger Wärme von der Wärmepumpenanordnung abgeführt werden muss.

Die Abführung der Wärmeenergie ist sinnvoll, um ein Überhitzen des Verdichters 5 bzw. sonstiger Bestandteile der Wärmepumpenanordnung zu verhindern.

Vorzugsweise umfasst die Haushaltsgeschirrspülmaschine eine Spülflottenpumpe 17, mit deren Hilfe Spülflotte 13 vom Pumpensumpf 18 zum Verflüssiger 6 und zurück in den Pumpensumpf 18 bzw. den Aufnahmeraum 1 gepumpt werden kann. Wird die Wärmepumpenanordnung und gleichzeitig die Spülflottenpumpe 17 betrieben, so erfolgt ein Wärmeübergang vom Wärmeträger innerhalb des Verflüssigers 6 auf die Spülflotte 13, die von der Spülflottenpumpe 17 durch den Verflüssiger 6 gepumpt wird.

In einer möglichen Ausführung der Erfindung ist es denkbar, dass die Haushaltsgeschirrspülmaschine neben der Wärmepumpenanordnung eine weitere Wärmequelle in Form einer Spülflottenheizung 8 umfasst. Die Spülflottenheizung 8 ist vorzugsweise in eine Spülflottenleitung 3 integriert und befindet sich insbesondere in Strömungsrichtung nach der Umwälzpumpe 15. Die Spülflottenheizung 8 kann die Spülflottenleitung 3 selbstverständlich auch umgeben oder in die Umwälzpumpe 15 integriert sein.

Wird nun die Tür 9 für einen Zeitraum geöffnet, dessen Betrag über einem in der Steuer- und/oder Regeleinheit 10 hinterlegten Grenzwert liegt, so ist es denkbar, die Wärmepumpenanordnung nach Ablauf des Zeitraums zu deaktivieren. Wird nun die Tür 9 innerhalb eines weiteren definierten Zeitraums wieder geschlossen, so ist es von Vorteil, die Wärmepumpenanordnung nicht wieder in Betrieb zu nehmen. Vielmehr ist es in diesem Fall vorteilhaft, die Erwärmung der Spülflotte 13 mit Hilfe der Spülflottenheizung 8 zu realisieren. Hierdurch wird vermieden, dass der Verdichter 5 gegen den zuvor aufgebauten Druck des Wärmeträgers innerhalb des Verdichters 5 ankämpfen muss.

Im Übrigen ist die Erfindung nicht auf das dargestellte Ausführungsbeispiel beschränkt. Vielmehr sind sämtliche Kombinationen der beschriebenen Einzelmerkmale, wie sie in den Ansprüchen, der Beschreibung sowie der Figur gezeigt oder beschrieben sind und soweit eine entsprechende Kombination technisch möglich bzw. sinnvoll erscheint, Gegenstand der Erfindung.

### Bezugszeichenliste

- 1: Aufnahmeraum
- 2: Spülgut
- 3: Spülflottenleitung
- 4: Verdampfer
- 5: Verdichter
- 6: Verflüssiger
- 7: Sprüharm
- 8: Spülflottenheizung
- 9: Tür
- 10: Steuer- und/oder Regeleinheit
- 11: Sensor
- 12: Expansionsorgan
- 13: Spülflotte
- 14: Geschirrkorb
- 15: Umwälzpumpe
- 16: Wärmeträgerleitung
- 17: Spülflottenpumpe
- 18: Pumpensumpf

## Patentansprüche

1. Haushaltsgeschirrspülmaschine mit einem durch eine Tür (9) verschließbaren Aufnahmeraum (1) zur Aufnahme von Spülgut (2) und mit einer Wärmepumpenanordnung, die bei ihrem Betrieb von einem Wärmeträger durchströmt wird, wobei die Wärmepumpenanordnung zumindest einen Verdampfer (4) zum Verdampfen des Wärmeträgers, einen Verdichter (5) zum Verdichten des vom Verdampfer (4) kommenden Wärmeträgers und einen Verflüssiger (6) zum Kondensieren des vom Verdichter (5) kommenden Wärmeträgers umfasst, wobei die Haushaltsgeschirrspülmaschine darüber hinaus eine Umwälzpumpe (15) aufweist, mit deren Hilfe Spülflotte (13) während eines Spülprogramms von einem Pumpensumpf (18) der Haushaltsgeschirrspülmaschine zu wenigstens einem Sprüharm (7) förderbar ist, wobei die Haushaltsgeschirrspülmaschine zumindest eine Steuer- und/oder Regeleinheit (10) sowie einen mit der Steuer- und/oder Regeleinheit (10) in Verbindung stehenden Sensor (11) aufweist, mit dessen Hilfe detektierbar ist, ob sich die Tür (9) in ihrer Schließstellung befindet oder nicht, wobei die Steuer- und/oder Regeleinheit (10) ausgebildet ist, die Umwälzpumpe (15) zu deaktivieren bzw. deren Förderleistung zu reduzieren, wenn die Steuer- und/oder Regeleinheit (10) mit Hilfe des Sensors (11) während des Betriebs der Umwälzpumpe (15) ein Öffnen der Tür (9) erkennt, und wobei die Steuer- und/oder Regeleinheit (10) ausgebildet ist, die Wärmepumpenanordnung zumindest für einen gewissen Zeitraum weiter zu betreiben, wenn die Steuer- und/oder Regeleinheit (10) während des Betriebs der Wärmepumpenanordnung mit Hilfe des Sensors (11) ein Öffnen der Tür (9) erkennt.

2. Haushaltsgeschirrspülmaschine gemäß dem vorangegangenen Anspruch, **dadurch gekennzeichnet, dass** die Haushaltsgeschirrspülmaschine eine Spülflottenpumpe (17) aufweist, mit deren Hilfe Spülflotte (13) vom Pumpensumpf (18) zum Verflüssiger (6) und zurück in den Aufnahmeraum (1) förderbar ist, so dass im Bereich des Verflüssigers (6) Wärme von dem durch den Verflüssiger (6) strömenden Wärmeträger auf die durch den Verflüssiger (6) strömende Spülflotte (13) übertragbar ist.

3. Haushaltsgeschirrspülmaschine gemäß dem vorangegangenen Anspruch, **dadurch gekennzeichnet, dass** die Steuer- und/oder Regeleinheit (10) ausgebildet ist, die Spülflottenpumpe (17) zumindest für einen gewissen Zeitraum weiter zu betreiben, um Wärme vom Verflüssiger (6) auf die Spülflotte (13) zu übertragen, wenn die Steuer- und/oder Regeleinheit (10) beim Betrieb der Spülflottenpumpe (17) sowie der Wärmepumpenanordnung mit Hilfe des Sensors (11) ein Öffnen der Tür (9) erkennt.

4. Haushaltsgeschirrspülmaschine gemäß einem der vorangegangenen Ansprüche, **dadurch gekennzeichnet, dass** die Steuer- und/oder Regeleinheit (10) ausgebildet ist, die Wärmepumpenanordnung nach dem Öffnen der Tür (9) bei weiterhin geöffneter Tür (9) nur für einen definierten Zeitraum weiter zu betreiben, wobei sich der Zeitraum vorzugsweise über maximal 120 s, vorzugsweise über maximal 60 s, ab dem Öffnen der Tür (9) erstreckt.

5. Haushaltsgeschirrspülmaschine gemäß einem der Ansprüche 2 bis 4, **dadurch gekennzeichnet, dass** die Steuer- und/oder Regeleinheit (10) ausgebildet ist, die Spülflottenpumpe (17) zu deaktivieren bzw. deren Förderleistung zu reduzieren, wenn die Steuer- und/oder Regeleinheit (10) während des Betriebs der Spülflottenpumpe (17) mit Hilfe des Sensors (11) ein Öffnen der Tür (9) erkennt, und dass die Steuer- und/oder Regeleinheit (10) ausgebildet ist, die Wärmepumpenanordnung nach dem Öffnen der Tür (9) bei weiterhin geöffneter Tür (9) nur für einen definierten Zeitraum weiter zu betreiben, wobei sich der Zeitraum vorzugsweise über maximal 60 s, vorzugsweise über maximal 30 s, ab dem Öffnen der Tür (9) erstreckt.

6. Haushaltsgeschirrspülmaschine gemäß Anspruch 4 oder 5, **dadurch gekennzeichnet, dass** die Haushaltsgeschirrspülmaschine eine elektrische Spülflottenheizung (8) aufweist, mit dessen Hilfe die Spülflotte (13) erwärmbar ist, wobei die Steuer- und/oder Regeleinheit (10) ausgebildet ist, die Spülflotte (13) mit Hilfe der Spülflottenheizung (8) zu erwärmen, wenn die Wärmepumpenanordnung nach Ablauf des in Anspruch 4 oder 5 genannten Zeitraums deaktiviert wird.

7. Haushaltsgeschirrspülmaschine gemäß dem vorangegangenen Anspruch, **dadurch gekennzeichnet, dass** die die Steuer- und/oder Regeleinheit (10) ausgebildet ist, die Leistung des Verdichters (5) nach dem Erkennen des Öffnens der Tür (9) zumindest für einen gewissen Zeitraum zu drosseln.

8. Verfahren zum Betreiben einer Haushaltsgeschirrspülmaschine mit einem durch eine Tür (9) verschließbaren Aufnahmeraum (1) zur Aufnahme von Spülgut (2) und mit einer Wärmepumpenanordnung, die bei ihrem Betrieb von einem Wärmeträger durchströmt wird, und die unter anderem einen Verdampfer (4), einen Verdichter (5) und einen Verflüssiger (6) umfasst, wobei der Wärmeträger beim Betrieb der Wärmepumpenanordnung mit Hilfe des Verdampfers (4) verdampft wird, wobei der vom Verdampfer (4) kommende Wärmeträger mit Hilfe des Verdichters (5) verdichtet wird, wobei der vom Verdichter (5) kommende Wärmeträger mit Hilfe des Verflüssigers (6) verflüssigt wird, wobei die Haushaltsgeschirrspülmaschine darüber hinaus eine Umwälzpumpe (15) aufweist, mit deren Hilfe Spülflotte (13) während eines Spülprogramms zumindest zeitweise von einem Pumpensumpf (18) der Haushaltsgeschirrspülmaschine zu wenigstens einem Sprüharm (7) gefördert wird, wobei die Umwälzpumpe (15) deaktiviert bzw. deren Förderleistung reduziert wird, wenn die Tür (9) beim Betrieb der Umwälzpumpe (15) geöffnet wird, und wobei die Wärmepumpenanordnung zumindest für einen gewissen Zeitraum weiter betrieben wird, wenn während des Betriebs der Wärmepumpenanordnung die Tür (9) geöffnet wird.

9. Verfahren gemäß dem vorangegangenen Anspruch, **dadurch gekennzeichnet, dass** die Haushaltsgeschirrspülmaschine eine Spülflottenpumpe (17) aufweist, mit deren Hilfe Spülflotte (13) während eines Spülprogramms zumindest zeitweise vom Pumpensumpf (18) zum Verflüssiger (6) und zurück in den Aufnahmeraum (1) gefördert wird, wobei beim Betrieb der Spülflottenpumpe (17) im Bereich des Verflüssigers (6) Wärme von dem durch den Verflüssiger (6) strömenden Wärmeträger auf die durch den Verflüssiger (6) strömende Spülflotte (13) übertragen wird.

10. Verfahren gemäß dem vorangegangenen Anspruch, **dadurch gekennzeichnet, dass** die Spülflottenpumpe (17) zumindest für einen gewissen Zeitraum betrieben wird, um Wärme vom Verflüssiger (6) auf die Spülflotte (13) zu übertragen, wenn die Tür (9) während des Betriebs der Wärmepumpenanordnung geöffnet wird.

11. Verfahren gemäß einem der Ansprüche 8 bis 10, **dadurch gekennzeichnet, dass** die Wärmepumpenanordnung nach dem Öffnen der Tür (9) bei weiterhin geöffneter Tür (9) nur für einen definierten Zeitraum weiter betrieben wird, wobei sich der Zeitraum vorzugsweise über maximal 120 s, vorzugsweise über maximal 60 s, ab dem Öffnen der Tür (9) erstreckt.

12. Verfahren gemäß einem der Ansprüche 9 bis 11, **dadurch gekennzeichnet, dass** die Spülflottenpumpe (17) deaktiviert bzw. mit reduzierter Förderleistung weiter betrieben wird, wenn die Tür (9) beim Betrieb der Spülflottenpumpe (17) geöffnet wird, wobei die Wärmepumpenanordnung nach dem Öffnen der Tür (9) bei weiterhin geöffneter Tür (9) nur für einen definierten Zeitraum weiter betrieben wird, wobei sich der Zeitraum vorzugsweise über maximal 60 s, vorzugsweise über maximal 30 s, ab dem Öffnen der Tür (9) erstreckt.

13. Verfahren gemäß Anspruch 11 oder 12, **dadurch gekennzeichnet, dass** die Spülflotte (13) mit Hilfe einer elektrischen Spülflottenheizung (8) der Haushaltsgeschirrspülmaschine erwärmt wird, wenn die Wärmepumpenanordnung nach Ablauf des in Anspruch 11 oder 12 genannten Zeitraums deaktiviert wird und die Tür (9) nach Ablauf des genannten Zeitraums wieder geschlossen und das Spülprogramm fortgesetzt wird.

14. Verfahren gemäß einem der Ansprüche 8 bis 13, **dadurch gekennzeichnet, dass** die Leistung des Verdichters (5) nach dem Erkennen des Öffnens der Tür (9) zumindest für einen gewissen Zeitraum gedrosselt wird.

## Claims

1. Household dishwasher with a receiving compartment (1), which can be closed by a door (9), for receiving items to be washed (2) and with a heat pump arrangement, through which a heat carrier passes during its operation, wherein the heat pump arrangement comprises at least an evaporator (4) for evaporating the heat carrier, a compressor (5) for compressing the heat carrier coming from the evaporator (4) and a condenser (6) for condensing the heat carrier coming from the compressor (5), wherein the household dishwasher furthermore has a circulation pump (15), with the aid of which during a wash cycle washing liquor (13) can be conveyed from a pump sump (18) of the household dishwasher to at least one spray arm (7), wherein the household dishwasher has at least one open-loop and/or closed-loop control unit (10) and a sensor (11) connected to the open-loop and/or closed-loop control unit (10), with the aid of which it is possible to detect whether or not the door (9) is in its closed position, wherein the open-loop and/or closed-loop control unit (10) is embodied to deactivate the circulation pump (15) or to reduce its flow rate if, during the operation of the circulation pump (15), the open-loop and/or closed-loop control unit (10) identifies an opening of the door (9) with the aid of the sensor (11) and wherein the open-loop and/or closed-loop control unit (10) is embodied to further operate the heat pump arrangement at least for a specific period of time if the open-loop and/or closed-loop control unit (10) identifies an opening of the door (9) during the operation of the heat pump arrangement with the aid of the sensor (11).

2. Household dishwasher according to the preceding claim, **characterised in that** the household dishwasher has a washing liquor pump (17), with the aid of which washing liquor (13) can be conveyed from the pump sump (18) to the condenser (6) and back into the receiving compartment (1) so that in the region of the condenser (6) heat can be transferred from the heat carrier flowing through the condenser (6) to the washing liquor (13) flowing through the condenser (6).

3. Household dishwasher according to the preceding claim, **characterised in that** the open-loop and/or closed-loop control unit (10) is embodied to further operate the washing liquor pump (17) at least for a specific period of time, in order to transfer heat from the condenser (6) to the washing liquor (13) if, during operation of the washing liquor pump (17) and the heat pump arrangement, the open-loop and/or closed-loop control unit (10) identifies an opening of the door (9) with the aid of the sensor (11).

4. Household dishwasher according to one of the preceding claims, **characterised in that** the open-loop and/or closed-loop control unit (10) is embodied, after the door (9) has been opened, to further operate the heat pump arrangement only for a defined period of time if the door remains open, wherein the period of time preferably extends over at most 120 s, preferably over at most 60 s, from when the door (9) was opened.

5. Household dishwasher according to one of claims 2 to 4, **characterised in that** the open-loop and/or closed-loop control unit (10) is embodied to deactivate the washing liquor pump (17) and/or its flow rate if, during operation of the wash liquor pump (17), the open-loop and/or closed-loop control unit (10) identifies an opening of the door (8) with the aid of the sensor (11) and that the open-loop and/or closed-loop control unit (10) is embodied, after the door (9) has been opened, to further operate the heat pump arrangement only for a defined period of time if the door (9) remains open, wherein the period of time preferably extends over at most 60 s, preferably over at most 30 s, from when the door (9) was opened.

6. Household dishwasher according to claim 4 or 5, **characterised in that** the household dishwasher has an electric washing liquor heater (8), with the aid of which the washing liquor (13) can be heated, wherein the open-loop and/or closed-loop control unit (10) is embodied to heat the washing liquor (13) with the aid of the washing liquor heater (8), when the heat pump arrangement is deactivated after the period of time cited in claim 4 or 5 has elapsed.

7. Household dishwasher according to the preceding claim, **characterised in that** the open-loop and/or closed-loop control unit (10) is embodied, after identifying that the door (9) was opened, to throttle the output of the compressor (5) at least for a specific period of time.

8. Method for operating a household dishwasher with a receiving compartment (1), which can be closed by a door (9), for receiving items to be washed (2) and with a heat pump arrangement, through which a heat carrier passes during its operation, and which inter alia comprises an evaporator (4), a compressor (5) and a condenser (6), wherein during operation of the heat pump arrangement the heat carrier is evaporated with the aid of the evaporator (4), wherein the heat carrier coming from the evaporator (4) is compressed with the aid of the compressor (5), wherein the heat carrier coming from the compressor (5) is condensed with the aid of the condenser (6), wherein the household dishwasher furthermore has a circulation pump (15), with the aid of which during a washing program washing liquor (13) is conveyed at least intermittently from a pump sump (18) of the household dishwasher to at least one spray arm (7), wherein the circulation pump (15) is deactivated or its flow rate is reduced if the door (9) is opened during operation of the circulation pump (15), and wherein the heat pump arrangement is further operated at least for a specific period of time if, during operation of the heat pump arrangement, the door (9) is opened.

9. Method according to the preceding claim, **characterised in that** the household dishwasher has a washing liquor pump (17), with the aid of which washing liquor (13) is conveyed during a wash cycle at least intermittently from the pump sump (18) to the condenser (6) and back into the receiving compartment (1), wherein, during operation of the washing liquor pump (17) in the region of the condenser (6), heat from the heat carrier flowing through the condenser (6) is transferred to the washing liquor (13) flowing through the condenser (6).

10. Method according to the preceding claim, **characterised in that** the washing liquor pump (17) is operated at least for a certain period of time, in order to transfer heat from the condenser (6) to the washing liquor (13) if the door (9) is opened during operation of the heat pump arrangement.

11. Method according to one of claims 8 to 10, **characterised in that** after the door (9) has been opened, the heat pump arrangement is only operated further for a defined period of time if the door (9) remains open, wherein the period of time preferably extends over at most 120 s, preferably over at most 60 s, from when the door (9) was opened.

12. Method according to one of claims 9 to 11, **characterised in that** the washing liquor pump (17) is deactivated or further operated with a reduced flow rate if, during operation of the washing liquor pump (17), the door (9) is opened, wherein the heat pump arrangement, after the door (9) has been opened, is opened only for a defined period of time if the door (9) remains open, wherein the period of time preferably extends over at most 60 s, preferably over at most 30 s, from when the door (9) was opened.

13. Method according to claim 11 or 12, **characterised in that** the washing liquor (13) is heated with the aid of an electric washing liquor heater (8) of the household dishwasher, when the heat pump arrangement is deactivated after the period of time cited in claim 11 or 12 has elapsed, and the door (9) is closed again after the cited period of time has elapsed and the washing program is continued.

14. Method according to one of claims 8 to 13, **characterised in that** after the opening of the door (9) has been identified, the output of the compressor (5) is throttled at least for a certain period of time.

## Revendications

1. Lave-vaisselle domestique comprenant un espace de réception (1) pouvant être fermé par une porte (9) destiné à recevoir des articles à laver (2) et un dispositif de pompe à chaleur, qui est traversé lors de son fonctionnement par l'écoulement d'un fluide caloporteur, dans lequel le dispositif de pompe à chaleur comprend au moins un évaporateur (4) pour évaporer le fluide caloporteur, un compresseur (5) pour comprimer le fluide caloporteur venant de l'évaporateur (4) et un condenseur (6) pour condenser le fluide caloporteur venant du compresseur (5), dans lequel le lave-vaisselle domestique comprend en outre une pompe de circulation (15) au moyen de laquelle de l'eau de lavage (13) peut être transportée durant un programme de lavage d'un puisard (18) du lave-vaisselle domestique jusqu'au moins un bras de lavage (7), dans lequel le lave-vaisselle domestique comprend au moins une unité de commande et/ou de régulation (10) ainsi qu'un capteur (11) étant en liaison avec l'unité de commande et/ou de régulation (10), à l'aide duquel il peut être détecté si oui ou non la porte (9) se trouve dans sa position de fermeture, dans lequel l'unité de commande et de régulation (10) est configurée pour désactiver la pompe de circulation (15) ou pour réduire son débit lorsque l'unité de commande et/ou de régulation (10) détecte une ouverture de la porte (9) à l'aide du capteur (11) durant le fonctionnement de la pompe de circulation (15), et dans lequel l'unité de commande et de régulation (10) est configurée pour continuer à faire fonctionner le dispositif de pompe à chaleur au moins pendant une certaine période lorsque l'unité de commande et/ou de régulation (10) détecte une ouverture de la porte (9) à l'aide du capteur (11) durant le fonctionnement du dispositif de pompe à chaleur.

2. Lave-vaisselle domestique selon la revendication précédente, **caractérisé en ce que** le lave-vaisselle domestique comprend une pompe d'eau de lavage (17), au moyen de laquelle de l'eau de lavage (13) peut être transportée du puisard (18) jusqu'au condenseur (6) et renvoyée dans l'espace de réception (1), de manière telle que dans la région du condenseur (6), de la chaleur du fluide caloporteur s'écoulant à travers le condenseur (6) peut être transmise à l'eau de lavage (13) s'écoulant à travers le condenseur (6).

3. Lave-vaisselle domestique selon la revendication précédente, **caractérisé en ce que** l'unité de commande et/ou de régulation (10) est configurée pour continuer à faire fonctionner la pompe d'eau de lavage (17) au moins pendant une certaine période, afin de transmettre de la chaleur du condenseur (6) à l'eau de lavage (13), lorsque l'unité de commande et/ou de régulation (10) détecte une ouverture de la porte (9) à l'aide du capteur (11) lors du fonctionnement de la pompe d'eau de lavage (17) ainsi que du dispositif de pompe à chaleur.

4. Lave-vaisselle domestique selon l'une des revendications précédentes, **caractérisé en ce que** l'unité de commande et/ou de régulation (10) est configurée pour continuer à faire fonctionner le dispositif de pompe à chaleur uniquement pendant une période définie après l'ouverture de la porte (9), dans le cas où la porte (9) continue à être ouverte, dans lequel la période s'étend notamment sur 120 s au maximum, de préférence sur 60 s au maximum, à partir de l'ouverture de la porte (9).

5. Lave-vaisselle domestique selon l'une des revendications 2 à 4, **caractérisé en ce que** l'unité de commande et/ou de régulation (10) est configurée pour désactiver la pompe d'eau de lavage (17) ou réduire son débit lorsque l'unité de commande et/ou de régulation (10) détecte une ouverture de la porte (9) à l'aide du capteur (11) durant le fonctionnement de la pompe d'eau de lavage (17), et **en ce que** l'unité de commande et de régulation (10) est configurée pour continuer à faire fonctionner le dispositif de pompe à chaleur uniquement pendant une période définie après l'ouverture de la porte (9), au cas où la porte (9) continue à être ouverte, dans lequel la période s'étend notamment sur 60 s au maximum, de préférence sur 30 s au maximum, à partir de l'ouverture de la porte (9).

6. Lave-vaisselle domestique selon la revendication 4 ou 5, **caractérisé en ce que** le lave-vaisselle domestique comprend un dispositif de chauffage électrique d'eau de lavage (8), au moyen duquel l'eau de lavage (13) peut être chauffée, dans lequel l'unité de commande et de régulation (10) est configurée pour chauffer l'eau de lavage (13) à l'aide du dispositif de chauffage d'eau de lavage (8) lorsque le dispositif de pompe à chaleur est désactivé après l'expiration de la période définie dans la revendication 4 ou 5.

7. Lave-vaisselle domestique selon la revendication précédente, **caractérisé en ce que** l'unité de commande et/ou de régulation (10) est configurée pour diminuer la puissance du compresseur (5) au moins pendant une certaine période après la détection de l'ouverture de la porte (9).

8. Procédé de fonctionnement d'un lave-vaisselle domestique comprenant un espace de réception (1) pouvant être fermé par une porte (9) destiné à recevoir des articles à laver (2) et un dispositif de pompe à chaleur, qui est traversé lors de son fonctionnement par l'écoulement d'un fluide caloporteur, et qui comprend entre autres un évaporateur (4), un compresseur (5) et un condenseur (6), dans lequel le fluide caloporteur est évaporé à l'aide de l'évaporateur (4) lors du fonctionnement du dispositif de pompe à chaleur, dans lequel le fluide caloporteur venant de l'évaporateur (4) est comprimé au moyen du compresseur (5), et le fluide caloporteur venant du compresseur (5) est condensé au moyen du condenseur (6), dans lequel le lave-vaisselle domestique comprend en outre une pompe de circulation (15) au moyen de laquelle de l'eau de lavage (13) peut être transportée durant un programme de lavage au moins périodiquement d'un puisard (18) du lave-vaisselle domestique jusqu'au moins un bras de lavage (7), dans lequel la pompe de circulation (15) est désactivée ou son débit est réduit lorsque la porte (9) est ouverte pendant le fonctionnement de la pompe de circulation (15), et dans lequel le dispositif de pompe à chaleur continue de fonctionner au moins pendant une certaine période lorsque la porte (9) est ouverte pendant le fonctionnement du dispositif de pompe à chaleur.

9. Procédé selon la revendication précédente, **caractérisé en ce que** le lave-vaisselle domestique comprend une pompe d'eau de lavage (17), au moyen de laquelle de l'eau de lavage (13) est transportée pendant un programme de lavage, au moins périodiquement, du puisard (18) jusqu'au condenseur (6) et renvoyée dans l'espace de réception (1), dans lequel lors du fonctionnement de la pompe d'eau de lavage (17), dans la région du condenseur (6), de la chaleur du fluide caloporteur s'écoulant à travers le condenseur (6) est transmise à l'eau de lavage (13) s'écoulant à travers le condenseur (6).

10. Procédé selon la revendication précédente, **caractérisé en ce que** la pompe d'eau de lavage (17) est mise en fonctionnement au moins pendant une certaine période, afin de transmettre de la chaleur du condenseur (6) à l'eau de lavage (13) lorsque la porte (9) est ouverte durant le fonctionnement du dispositif de pompe à chaleur.

11. Procédé selon l'une des revendications 8 à 10, **caractérisé en ce que** le dispositif de pompe à chaleur continue de fonctionner après l'ouverture de la porte (9) uniquement pendant une période définie, dans le cas où la porte (9) continue à être ouverte, dans lequel la période s'étend notamment sur 120 s au maximum, de préférence sur 60 s au maximum, à partir de l'ouverture de la porte (9).

12. Procédé selon l'une des revendications 9 à 11, **caractérisé en ce que** la pompe d'eau de lavage (17) est désactivée ou continue à fonctionner à un débit réduit lorsque la porte (9) est ouverte au cours du fonctionnement de la pompe d'eau de lavage (17), dans lequel le dispositif de pompe à chaleur continue à fonctionner uniquement pendant une période définie après l'ouverture de la porte (9), dans le cas où la porte (9) continue à être ouverte, dans lequel la période s'étend notamment sur 60 s au maximum, de préférence sur 30 s au maximum, à partir de l'ouverture de la porte (9).

13. Procédé selon la revendication 11 ou 12, **caractérisé en ce que** l'eau de lavage (13) est chauffée au moyen d'un dispositif de chauffage électrique d'eau de lavage (8) du lave-vaisselle domestique lorsque le dispositif de pompe à chaleur est désactivé après l'expiration de la période définie dans la revendication 11 ou 12 et la porte est refermée après l'expiration de ladite période et le programme de lavage est poursuivi.

14. Procédé selon l'une des revendications 8 à 13, **caractérisé en ce que** la puissance du compresseur (5) est réduite au moins pendant une certaine période après la détection de l'ouverture de la porte (9).
